# EUROPÄISCHE PATENTANMELDUNG

(11) **EP 4 286 070 A1**
(43) Veröffentlichungstag der Anmeldung: **06.12.2023**
(21) Anmeldenummer: 23175930.9
(22) Anmeldetag: 30.05.2023
(51) Int. Cl.: B21D 39/03, F16B 5/04

(54) **VERFAHREN ZUM VERBINDEN VON ZWEI WERKSTÜCKABSCHNITTEN SOWIE WERKSTÜCKVERBINDUNG**

(30) Priorität: 30.05.2022 DE 102022113530
(71) Anmelder: Meleghy Automotive GmbH & Co. KG, 57234 Wilnsdorf (DE)
(72) Erfinder: Werle, Thomas, 51789 Lindlar-Frielingsdorf (DE); Jahn, Joachim, 47495 Rheinberg-Borth (DE); Krhan, Mervan, 57074 Siegen (DE)
(74) Vertreter: Kalkoff & Partner Patentanwälte mbB

(57) **Zusammenfassung**

Die Erfindung betrifft eine Werkstückverbindung und ein Verfahren zum Verbinden von mindestens zwei Werkstückabschnitten, die jeweils einen flachen Verbindungsabschnitt mit einer Außenfläche und einer von der Außenfläche abgewandten Kontaktfläche aufweisen, mit den Schritten
- Erzeugen einer einen ersten Werkstückabschnitt im Bereich des Verbindungsabschnitts durchdringenden, an eine erste Kontaktfläche und eine erste Außenfläche angrenzenden Öffnung,
- Senken der Öffnung im Bereich der ersten Außenfläche zur Erzeugung eines konischen Kontaktabschnitts,
- Vorprägen eines zweiten Werkstückabschnitts zur Erzeugung eines zur Anordnung in der Öffnung angepassten, von einer zweiten Kontaktfläche des zweiten Werkstückabschnitts im Bereich des Verbindungsabschnitts vorstehenden Vorsprungs und
- Anordnen des Vorsprungs in der Öffnung zur Anlage der ersten Kontaktfläche an der zweiten Kontaktfläche.

Um eine stabile und zuverlässige Werkstückverbindung sowie ein Verfahren bereitzustellen, dass auf einfache und zuverlässige Weise eine stabile Verbindung von Werkstückabschnitten ermöglicht, ist vorgesehen, dass der in der Öffnung angeordnete Vorsprung zur Erzeugung einer formschlüssigen Verbindung der Werkstückabschnitte derart endgeprägt wird, dass ein Endabschnitt des Vorsprungs in den konischen Kontaktabschnitt des ersten Werkstückabschnitts umgeformt wird.

## Beschreibung

Die Erfindung betrifft eine Werkstückverbindung und ein Verfahren zum Verbinden von mindestens zwei Werkstückabschnitten, die jeweils einen flachen Verbindungsabschnitt mit einer Außenfläche und einer von der Außenfläche abgewandten Kontaktfläche aufweisen, mit den Schritten
- Erzeugen einer einen ersten Werkstückabschnitt im Bereich des Verbindungsabschnitts durchdringenden, an eine erste Kontaktfläche und eine erste Außenfläche angrenzende Öffnung,
- Senken der Öffnung im Bereich der ersten Außenfläche zur Erzeugung eines konischen Kontaktabschnitts,
- Vorprägen eines zweiten Werkstückabschnitts zur Erzeugung eines zur Anordnung in der Öffnung angepassten, von einer zweiten Kontaktfläche des zweiten Werkstückabschnitts im Bereich des Verbindungsabschnitts vorstehenden Vorsprungs und
- Anordnen des Vorsprungs in der Öffnung zur Anlage der ersten Kontaktfläche an der zweiten Kontaktfläche.

Verfahren der eingangs genannten Art werden dazu eingesetzt, um zwei oder mehrere Werkstückabschnitte, bspw. eines Werkstücks oder zwei oder mehrerer unterschiedlicher Werkstücke im Bereich ihrer flachen Verbindungsabschnitte miteinander zu verbinden.

Zur Verbindung der Werkstückabschnitte oder der Werkstücke weist ein erster Werkstückabschnitt im Bereich des flachen Verbindungsabschnitts eine Öffnung und ein zweiter Werkstückabschnitt im Bereich des flachen Verbindungsabschnitts einen Vorsprung auf. Kontaktflächen der flachen Verbindungsabschnitte werden unter Anordnung des Vorsprungs in der Öffnung aneinander angeordnet.

Derzeitige Verfahren zur Festlegung der Werkstückabschnitte sehen in einem weiteren Schritt die Herstellung einer stoffschlüssigen Verbindung vor. Hierzu wird der Vorsprung des zweiten Werkstückabschnitts beispielsweise mit einem an einer von der Kontaktfläche abgewandten Außenfläche angeordneten konischen Kontaktabschnitt des ersten Werkstückabschnitts verschweißt. Die beim Schweißen erforderlichen hohen Temperaturen führen im Bereich des Kontaktabschnitts zu einer Gefügeänderung der Werkstückabschnitte, welche zu einer mangelnden Festigkeit und Stabilität der Werkstückverbindung sowie der Werkstückabschnitte im Wärmeeinflussbereich führt.

Hiervon ausgehend liegt der Erfindung die Aufgabe zugrunde, ein Verfahren bereitzustellen, dass auf einfache und zuverlässige Weise eine stabile Verbindung von Werkstückabschnitten ermöglicht. Ferner liegt der Erfindung die Aufgabe zugrunde, eine stabile und zuverlässige Werkstückverbindung bereitzustellen.

Die Erfindung löst die Aufgabe durch ein Verfahren mit den Merkmalen des Anspruchs 1 sowie durch eine Werkstückverbindung mit den Merkmalen des Anspruchs 8. Vorteilhafte Weiterbildungen der Erfindung sind in den abhängigen Ansprüchen angegeben.

Kennzeichnend für das erfindungsgemäße Verfahren ist, dass der in der Öffnung angeordnete Vorsprung zur Erzeugung einer formschlüssigen Verbindung der Werkstückabschnitte derart endgeprägt wird, dass ein Endabschnitt des Vorsprungs in den konischen Kontaktabschnitt des ersten Werkstückabschnitts umgeformt wird.

Ein Werkstückabschnitt ist ein Abschnitt eines Werkstücks, welches ein Halbzeug, beispielsweise einen Rohrkörper, z.B. ein Rohr, oder einen Plattengrundkörper, z.B. ein Blech beschreibt. Die Werkstückabschnitte können sich jeweils über verschiedene Teilbereiche eines Werkstücks oder über einen Teilbereich unterschiedlicher Werkstücke erstrecken. Beispielsweise sind der erste Werkstückabschnitt an einem ersten Werkstück und der zweite Werkstückabschnitt an einem zweiten Werkstück angeordnet.

Der flache Verbindungsabschnitt erstreckt sich jeweils zumindest über einen Teilbereich der Werkstückabschnitte. Die Außenfläche und die Kontaktfläche eines flachen Verbindungsabschnitts sind jeweils im Abstand voneinander angeordnet. Unter flach wird verstanden, dass die Kontaktfläche und bevorzugt die Außenfläche vor dem Erzeugen der Öffnung und dem Erzeugen des Vorsprungs im Wesentlichen erhebungs- und vertiefungsfrei ausgebildet sind. Hierbei bedeutet im Wesentlichen vorzugsweise, dass keine makroskopisch erkennbaren Erhebungen oder Vertiefungen an der Kontaktfläche und bevorzugt der Außenfläche angeordnet sind. Beispielsweise ist der flache Verbindungsabschnitt ein gepresster Endabschnitt eines Rohrkörpers oder vorzugsweise ein Abschnitt eines Plattengrundkörpers.

Erfindungsgemäß wird eine den ersten Werkstückabschnitt im Bereich des Verbindungsabschnitts durchdringende Öffnung erzeugt, sodass diese an die erste Kontaktfläche und die erste Außenfläche angrenzt. Die Öffnung ist ein den ersten Werkstückabschnitt von der Kontaktfläche bis zur Außenfläche oder umgekehrt durchdringender freier Bereich. Ferner weist die Öffnung einen sich entlang einer senkrecht zur Außenfläche und/oder Kontaktfläche angeordneten Längsachse der Öffnung zwischen der ersten Außenfläche und der ersten Kontaktfläche erstreckenden, beispielsweise polygonförmigen, ellipsenförmigen oder kreisförmigen Querschnitt auf. Zum Erzeugen der Öffnung kann jedes dazu geeignete Verfahren, beispielsweise Stanzen, Bohren, Laserschneiden oder Fräsen eingesetzt werden.

Die Öffnung wird erfindungsgemäß nach Ihrer Ausbildung im Bereich der ersten Außenfläche zur Erzeugung eines konischen Kontaktabschnitts gesenkt. Hierbei bezeichnet das Senken die konische, auch kegelförmige Erweiterung der Öffnung, sodass der konische Kontaktabschnitt vorzugsweise einen an die erste Außenfläche angrenzenden Umfang aufweist, der größer als ein Umfang der Öffnung ist. Unter dem Umfang wird eine den Querschnitt der Öffnung oder den Querschnitt des konischen Kontaktabschnitts begrenzende Linie verstanden. Zum Senken der Öffnung kann beispielsweise ein geeigneter Senker eingesetzt werden. Der konische Kontaktabschnitt ist vorzugsweise ein die Öffnung umgreifender freier Bereich des ersten Werkstückabschnitts.

Erfindungsgemäß wird der zweite Werkstückabschnitt zur Erzeugung eines von der zweiten Kontaktfläche des zweiten Werkstückabschnitts im Bereich des Verbindungsabschnitts vorstehenden Vorsprungs vorgeprägt. Hierbei wird der Vorsprung zur Anordnung in der Öffnung angepasst. Beim Vorprägen wird auf die zweite Außenfläche des zweiten Werkstückabschnitts Druck ausgeübt, sodass der flache Verbindungsabschnitt des zweiten Werkstückabschnitts von der zweiten Außenfläche in Richtung auf die zweite Kontaktfläche umgeformt wird. Der Vorsprung ist zylinderartig ausgebildet und weist einen sich von der zweiten Kontaktfläche entlang einer senkrecht zu der Kontaktfläche und/oder der Außenfläche angeordneten Längsachse des Vorsprungs erstreckenden, an den Querschnitt der Öffnung angepassten Querschnitt auf. Weiter ist der Vorsprung im Bereich des flachen Verbindungsabschnitts, bevorzugt an dem flachen Verbindungsabschnitt angeordnet.

Der Vorsprung wird erfindungsgemäß zur Anlage der ersten Kontaktfläche an der zweiten Kontaktfläche in der Öffnung angeordnet. Durch die Anordnung des Vorsprungs in der Öffnung liegt die erste Kontaktfläche an der zweiten Kontaktfläche an. Zum Anordnen des Vorsprungs in der Öffnung wird der erste Werkstückabschnitt an dem zweiten Werkstückabschnitt oder umgekehrt beispielsweise manuell, z.B. per Hand oder maschinell, z.B. mittels eines Roboterarms angeordnet.

Erfindungsgemäß wird der in der Öffnung angeordnete Vorsprung zur Erzeugung einer formschlüssigen Verbindung der Werkstückabschnitte derart endgeprägt, dass ein Endabschnitt des Vorsprungs in den konischen Kontaktabschnitt des ersten Werkstückabschnitts umgeformt wird. Beim Endprägen wird auf den Endabschnitt oder den Endabschnitt und die Innenfläche des Vorsprungs Druck ausgeübt. Der Endabschnitt wird durch das Endprägen umgeformt, sodass das Material des Endabschnitts in den konischen Kontaktabschnitt fließt, wodurch ein Formschluss zwischen dem umgeformten Endabschnitt des Vorsprungs und dem konischen Kontaktabschnitt in Längsachsenrichtung der Öffnung und/oder in Längsachsenrichtung des Vorsprungs, also ein Formschluss zwischen dem ersten und zweiten Werkstückabschnitt erzeugt wird.

Durch das Endprägen des Vorsprungs kann eine formschlüssige Verbindung mit hoher Festigkeit und Stabilität erzielt werden. Hierdurch kann auf bisher notwendige Verbindungselemente, wie z.B. eine Schraube oder ein Niet sowie auf Schweißverfahren zur Verbindung der beiden Werkstückabschnitte oder der beiden Werkstücke verzichtet werden. Indem die Notwendigkeit eines ggf. eingesetzten Verbindungselements entfällt, können die Werkstückabschnitte zuverlässig, effizient und über einen langen Zeitraum miteinander verbunden werden. Dadurch dass die Notwendigkeit eines ggf. angewendeten Schweißverfahrens entfällt, kann Gefügeänderungen sowie Verzug der Werkstückabschnitte, insbesondere im Bereich der flachen Verbindungsabschnitte entgegengewirkt werden.

Nach einer vorteilhaften Ausgestaltung der Erfindung ist vorgesehen, dass der Vorsprung derart endgeprägt wird, dass eine der Kontaktfläche abgewandte Stirnfläche des Vorsprungs flächenbündig zu der ersten Außenfläche verläuft. Hierbei wird unter flächenbündig verstanden, dass die Stirnfläche des Vorsprungs und die erste Außenfläche in der gleichen Ebene angeordnet sind. Hierzu wird beim Endprägen auf den Endabschnitt des Vorsprungs und die Innenfläche des Vorsprungs Druck ausgeübt, sodass die Stirnfläche des Vorsprungs nach dem Endprägen komplanar zu der Außenfläche des ersten Werkstückabschnitts angeordnet ist. Die Außenflächen der Werkstückabschnitte weisen durch die vorteilhafte Ausgestaltung der Erfindung keine, beispielsweise für die weitere Verarbeitung oder den Einbau der Werkstückverbindung störenden Materialerhöhungen auf.

Bevorzugt wird der zweite Werkstückabschnitt derart im Bereich des Verbindungsabschnitts vorgeprägt, dass der Vorsprung einen zwischen der zweiten Außenfläche und der Stirnfläche des Vorsprungs angeordneten Hohlraum aufweist. Der Hohlraum weist einen sich entlang der Längsachse des Vorsprungs von der zweiten Außenfläche bis zu einer zwischen der zweiten Außenfläche und der Stirnfläche des Vorsprungs angeordneten Innenfläche erstreckenden, bevorzugt an den Querschnitt des Vorsprungs angepassten Querschnitt auf. Beispielsweise ist der Hohlraum ein durch das Vorprägen verbleibendes domartiges Sackloch, also vorzugsweise ein zur zweiten Außenfläche offenes Loch von geringer Länge.

Der konische Kontaktabschnitt kann grundsätzlich beliebig, beispielsweise ungleichmäßig radial versetzt zu der Längsachse der Öffnung, erzeugt werden. Gemäß einer vorteilhaften Weiterbildung der Erfindung ist jedoch vorgesehen, dass die erste Außenfläche des ersten Werkstückabschnitts derart bearbeitet wird, dass der konische Kontaktabschnitt des ersten Werkstückabschnitts eine koaxial zu der Öffnung angeordnete konische Kontur aufweist. Unter dem Bearbeiten der ersten Außenfläche des ersten Werkstückabschnitts wird das Senken der Öffnung verstanden. Die konische Kontur ist vorzugsweise in einem spitzen Winkel, bevorzugt in einem Winkel von 10 bis 80 ° besonders bevorzugt in einem Winkel von 15 bis 60 °, ganz besonders bevorzugt in einem Winkel von 20 bis 55 ° zu der Längsachse der Öffnung angeordnet.

Der konische Kontaktabschnitt ist durch die konisch ausgebildete Kontur bevorzugt als Hohlkegelstumpf ausgebildet, wobei eine Grundfläche des als Hohlkegelstumpf ausgebildeten Kontaktabschnitts komplanar zu der ersten Außenfläche angeordnet ist. Beispielsweise ist die konische Kontur eine Fase. Indem der konische Kontaktabschnitt eine koaxial zu der Längsachse der Öffnung angeordnete Kontur aufweist, kann auf vorteilhafte Weise gewährleistet werden, dass das Material des Endabschnitts beim Endprägen zuverlässig in den konischen Kontaktabschnitt fließen kann, sodass der Endabschnitt des Vorsprungs einfach und zuverlässig in den konischen Kontaktabschnitt umgeformt werden kann.

Vorzugsweise weisen der Endabschnitt des Vorsprungs und der konische Kontaktabschnitt ein aufeinander abgestimmtes Volumen auf. Nach einer vorteilhaften Ausgestaltung der Erfindung ist daher vorgesehen, dass die erste Außenfläche des ersten Werkstückabschnitts derart bearbeitet und/oder der zweite Werkstückabschnitt derart umgeformt wird, dass der Endabschnitt des Vorsprungs und der konische Kontaktabschnitt in einem Volumenverhältnis von maximal 1:2, bevorzugt maximal 1:1,5, besonders bevorzugt maximal 1:1 stehen. Hierdurch kann auf einfache und zuverlässige Weise die flächenbündige Anordnung der Stirnfläche des Vorsprungs zu der ersten Außenfläche gewährleistet werden.

Gemäß einer vorteilhaften Weiterbildung der Erfindung ist vorgesehen, dass der Vorsprung außenflächenseitig mittels eines entlang einer im Winkel, bevorzugt senkrecht zu der zweiten Außenfläche angeordneten Bewegungsbahn verstellbaren Stanzdorns umgeformt wird. Hierbei wird unter außenflächenseitig verstanden, dass der Stanzdorn vor der Verstellung entlang der Bewegungsbahn im Abstand von der zweiten Außenfläche des zweiten Werkstückabschnitts angeordnet ist. Der Stanzdorn ist zylinderartig ausgebildet und weist einen sich entlang einer Längsachse des Stanzdorns erstreckenden beispielsweise kreisförmigen, polygonförmigen oder ellipsenförmigen Querschnitt auf. Beim Vorprägen und beim Endprägen wird der Stanzdorn entlang der Bewegungsbahn in Richtung auf die zweite Außenfläche verstellt. Beim Vorprägen übt der Stanzdorn zur Erzeugung des Vorsprungs Druck auf die zweite Außenfläche auf, wodurch der zweite Werkstückabschnitt im Bereich des flachen Verbindungsabschnitts in Richtung der Bewegungsrichtung des Stanzdorns umgeformt wird.

Besonders bevorzugt weist der Stanzdorn eine an den Vorsprung und/oder die Öffnung angepasste Stanzfläche auf, die beim Umformen des Vorsprungs zur Verformung des Endabschnitts auf die Innenfläche des Vorsprungs einwirkt. Die Stanzfläche beschreibt den abschließenden Querschnitt des Stanzdorns und ist vorzugsweise senkrecht zu der Längsachse des Stanzdorns angeordnet. Die Stanzfläche übt beim Vorprägen auf die zweite Außenfläche des zweiten Werkstückabschnitts und beim Endprägen auf die Innenfläche des Vorsprungs jeweils derartig Druck aus, dass der Vorsprung erzeugt oder der Endabschnitt des Vorsprungs umgeformt wird. Je nach Werkstoff der Werkstückabschnitte oder der Werkstücke kann der Stanzdorn manuell verstellt werden. Bevorzugt wird der Stanzdorn maschinell, beispielsweise mittels eines elektrischen, pneumatischen oder hydraulischen Kolbens entlang der Bewegungsbahn verstellt. Der Hohlraum des Vorsprungs wird beim Vorprägen des zweiten Werkstückabschnitts durch die auf die zweite Außenfläche einwirkende Stanzfläche des Stanzdorns gebildet. Vorzugsweise wird der Hohlraum, z.B. der Querschnitt des Hohlraums oder die Form der Innenfläche des Vorsprungs durch die Ausgestaltung des Stanzdorns, z.B. die Größe und Form der Stanzfläche, ausgebildet. Die Stanzfläche ist an den Vorsprung und/oder die Öffnung angepasst, d.h., dass die Stanzfläche eine an den Umfang der Öffnung oder an einen Umfang einer Mantelfläche des Vorsprungs angepasste Kontur aufweist. Bevorzugt ist die Kontur der Stanzfläche kleiner als der Umfang der Öffnung und der Umfang der Mantelfläche des Vorsprungs.

Die Werkstückabschnitte können in beliebiger Weise zur Anordnung des Vorsprungs in der Öffnung zueinander ausgerichtet werden. Nach einer vorteilhaften Weiterbildung der Erfindung ist vorgesehen, dass die Werkstückabschnitte vor dem Anordnen des Vorsprungs derart zueinander ausgerichtet werden, dass die Längsachse des Vorsprungs in der Längsachse der Öffnung angeordnet ist, wodurch der erste oder zweite Werkstückabschnitt zur Anordnung des Vorsprungs in der Öffnung in Richtung einer in der Längsachse des Vorsprungs und der Längsachse der Öffnung angeordneten Bewegungsbahn in Richtung auf den zweiten oder ersten Werkstückabschnitt verstellt werden kann. Die beiden Werkstückabschnitte werden derart ausgerichtet, dass die Kontaktflächen der flachen Verbindungsabschnitte einander zugewandt angeordnet sind. Die vorteilhafte Weiterbildung der Erfindung ermöglicht eine schnelle und einfache Anordnung des Vorsprungs in der Öffnung.

Mit dem vorgestellten Verfahren können auch mehr als zwei Werkstückabschnitte eines oder unterschiedlicher Werkstücke sowie mehrere Werkstücke miteinander verbunden werden. Außerdem können Werkstückabschnitte oder Werkstücke unterschiedlicher Dicke und/oder unterschiedlicher Werkstoffe miteinander verbunden werden. Für großflächige Werkstückabschnitte oder Werkstücke können mehrere im Abstand voneinander angeordnete flache Verbindungsabschnitte jeweils mit dem mit der Öffnung verbundenen Vorsprung vorgesehen sein.

Die Werkstückverbindung weist einen einen ersten flachen Verbindungsabschnitt aufweisenden ersten Werkstückabschnitt und einen einen zweiten flachen Verbindungsabschnitt aufweisenden zweiten Werkstückabschnitt auf. Die flachen Verbindungsabschnitte weisen jeweils eine Außenfläche und eine von dieser abgewandte Kontaktfläche auf. Eine erste Kontaktfläche des ersten Werkstückabschnitts und eine zweite Kontaktfläche des zweiten Werkstückabschnitts liegen aneinander an.

Der erste Werkstückabschnitt weist eine den ersten Werkstückabschnitt durchdringende, an die erste Kontaktfläche und eine erste Außenfläche angrenzende Öffnung und einen im Bereich der Öffnung angeordneten konischen Kontaktabschnitt auf. Der zweite Werkstückabschnitt weist einen von der zweiten Kontaktfläche vorstehenden und in der Öffnung angeordneten Vorsprung auf.

Kennzeichnend für die erfindungsgemäße Werkstückverbindung ist, dass der Vorsprung des zweiten Werkstückabschnitts einen derartig in den konischen Kontaktabschnitt umgeformten Endabschnitt aufweist, dass die beiden Werkstückabschnitte in Längsachsenrichtung der Öffnung und des Vorsprungs formschlüssig miteinander verbunden sind. Durch den in den konischen Kontaktabschnitt umgeformten Endabschnitt kann ohne den Einsatz eines Verbindungselements eine zuverlässige Werkstückverbindung mit hoher Festigkeit und hoher Stabilität ermöglicht werden.

Besonders bevorzugt ist der Endabschnitt derart umgeformt, dass eine der Kontaktfläche abgewandte Stirnfläche des Vorsprungs flächenbündig zu der ersten Außenfläche verläuft. Die Stirnfläche des Vorsprungs und die erste Außenfläche können wie vorstehend für das Verfahren beschrieben ausgebildet und angeordnet sein. Indem die Stirnfläche des Vorsprungs flächenbündig zu der ersten Außenfläche verläuft, also bevorzugt komplanar zu der ersten Außenfläche angeordnet ist, weisen die Außenflächen der Werkstückabschnitte vorteilhafter Weise keine, beispielsweise für die weitere Verarbeitung oder den Einbau der Werkstückverbindung störenden Materialerhöhungen auf.

Ein Ausführungsbeispiel wird nachstehend mit Bezug auf die Zeichnungen erläutert. In den Zeichnungen zeigen:
- Fig.1: eine perspektivische Ansicht eines ersten Werkstücks mit einer Öffnung;
- Fig.1a: einen Querschnitt durch das erste Werkstück aus Fig.1 entlang der Linie A-A;
- Fig.2: eine perspektivische Ansicht auf das erste Werkstück von Fig.1 und 1a mit einer gesenkten Öffnung;
- Fig.2a: einen Querschnitt durch das erste Werkstück aus Fig. 2 entlang der Linie B-B;
- Fig.3: eine perspektivische Ansicht eines zweiten Werkstücks mit einem Vorsprung;
- Fig.3a: einen Querschnitt durch das zweite Werkstück aus Fig. 3 entlang der Linie C-C;
- Fig.4: eine perspektivische Ansicht des an dem zweiten Werkstück aus Fig. 3 und 3a angeordneten ersten Werkstücks aus Fig. 1-2a;
- Fig.4a: einen Querschnitt durch die Werkstücke aus Fig. 4 entlang der Linie D-D;
- Fig.5: eine perspektivische Ansicht einer Werkstückverbindung der Werkstücke aus Fig. 1 bis 4a;
- Fig.5a: einen Querschnitt durch die Werkstückverbindung aus Fig.5 entlang der Linie E-E;
- Fig.6-8: perspektivische Ansichten verschiedener Ausführungsformen der Werkstückverbindung und
- Fig.9: ein schematisches Ablaufdiagramm eines Verfahrens zur Verbindung von zwei Werkstückabschnitten.

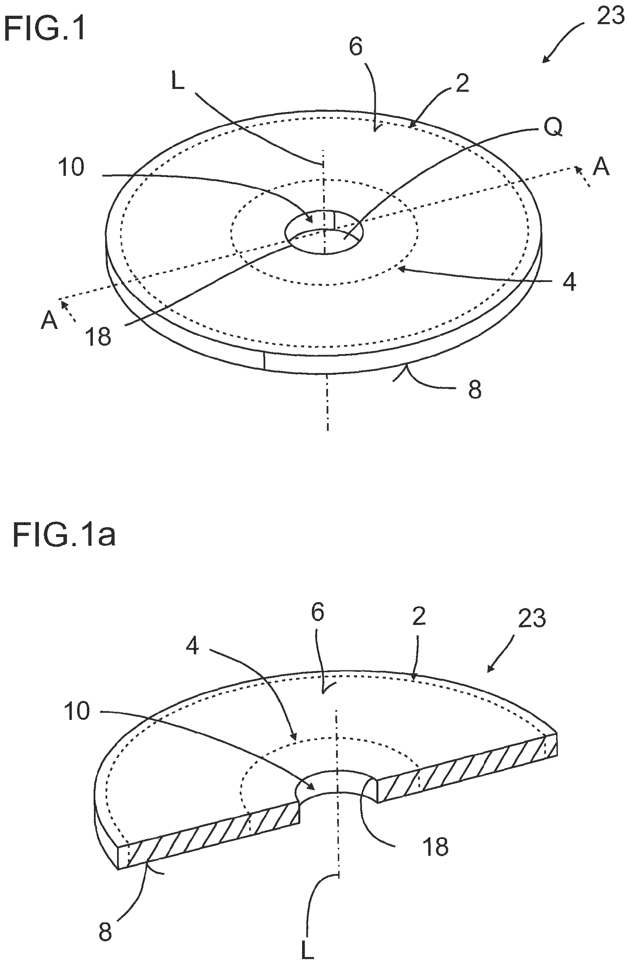

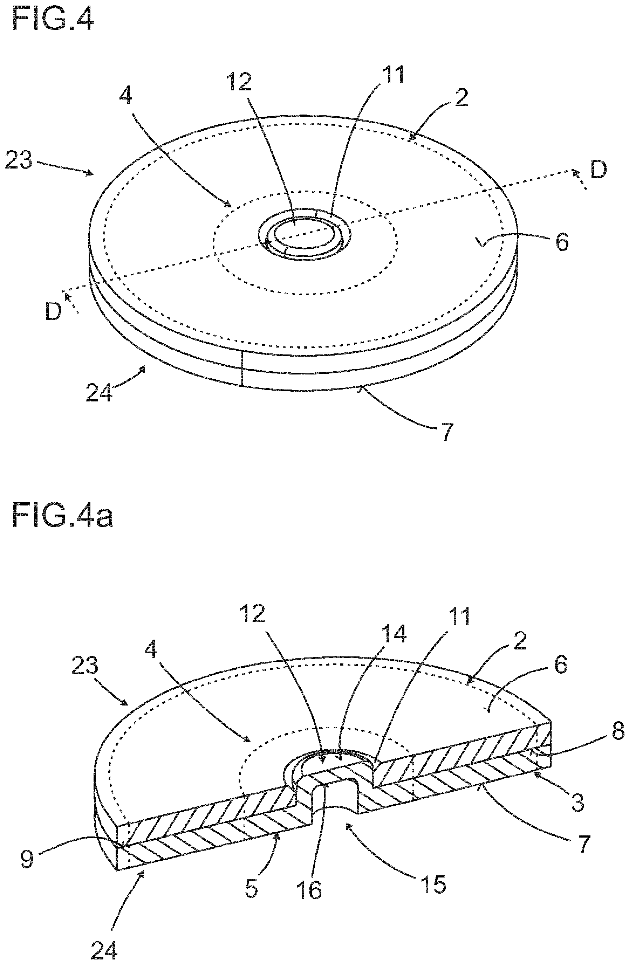

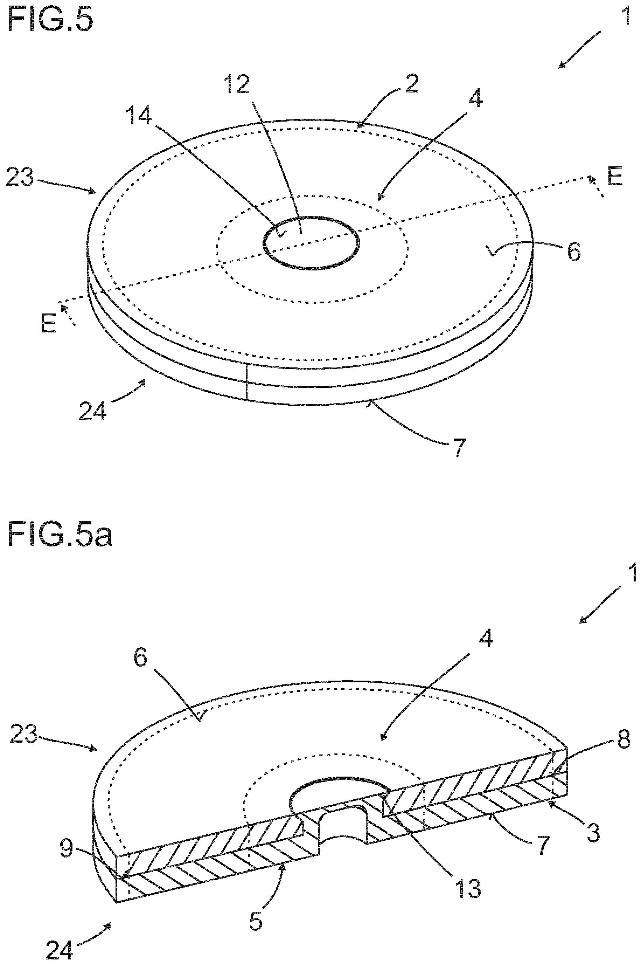

In den Fig. 1 bis 5 sind in schematischer Darstellung beispielhafte Schritte eines Verfahrens zur Verbindung von zwei Werkstückabschnitten 2, 3 dargestellt. Fig. 5 und 5a zeigen eine nach dem Verfahren hergestellte Werkstückverbindung 1 mit einem ersten Werkstückabschnitt 2 und einem zweiten Werkstückabschnitt 3. Der erste Werkstückabschnitt 2 ist an einem ersten Werkstück 23 angeordnet und der zweite Werkstückabschnitt 3 ist an einem zweiten Werkstück 24 angeordnet.

Der erste Werkstückabschnitt 2 weist einen ersten flachen Verbindungsabschnitt 4 und der zweite Werkstückabschnitt 3 weist einen zweiten flachen Verbindungsabschnitt 5 auf. Die flachen Verbindungsabschnitte 4, 5 weisen jeweils eine Außenfläche 6, 7 und eine von der Außenfläche 6, 7 abgewandte Kontaktfläche 8, 9 auf. An dem ersten flachen Verbindungsabschnitt 4 sind eine erste Außenfläche 6 und eine im Abstand von dieser angeordnete erste Kontaktfläche 8 angeordnet. An dem zweiten flachen Verbindungsabschnitt 5 sind eine zweite Außenfläche 7 und eine im Abstand von dieser angeordnete zweite Kontaktfläche 9 angeordnet. Die erste Kontaktfläche 8 und die zweite Kontaktfläche 9 liegen aneinander an.

Der erste Werkstückabschnitt 2 weist eine den ersten Werkstückabschnitt 2 durchdringende, an die erste Kontaktfläche 8 und die erste Außenfläche 6 angrenzende Öffnung 10 und einen im Bereich der Öffnung 10 angeordneten konischen Kontaktabschnitt 11 auf. Der zweite Werkstückabschnitt 3 weist einen von der zweiten Kontaktfläche 9 vorstehenden und in der Öffnung 10 angeordneten Vorsprung 12 auf.

Die beiden Werkstückabschnitte 2, 3 sind über einen in dem konischen Kontaktabschnitt 11 angeordneten umgeformten Endabschnitt 13 in Richtung einer Längsachse L der Öffnung 10 formschlüssig miteinander verbunden, d.h. ein Formschluss zwischen dem umgeformten Endabschnitt 13 und dem konischen Kontaktabschnitt 11 in Längsachsenrichtung der Öffnung 10. Eine der ersten und zweiten Kontaktfläche 8, 9 abgewandte Stirnfläche 14 des Vorsprungs 12 verläuft flächenbündig zu der ersten Außenfläche 6.

Der zweite Werkstückabschnitt 3 weist ferner einen zwischen der zweiten Außenfläche 7 und der Stirnfläche 14 des Vorsprungs 12 angeordneten Hohlraum 15 auf. Letzterer weist einen sich entlang einer Längsachse LV des Vorsprungs 12 von der zweiten Außenfläche 7 bis zu einer zwischen der zweiten Außenfläche 7 und der Stirnfläche 14 angeordneten Innenfläche 16 des Vorsprungs 12 erstreckenden Querschnitt QH auf.

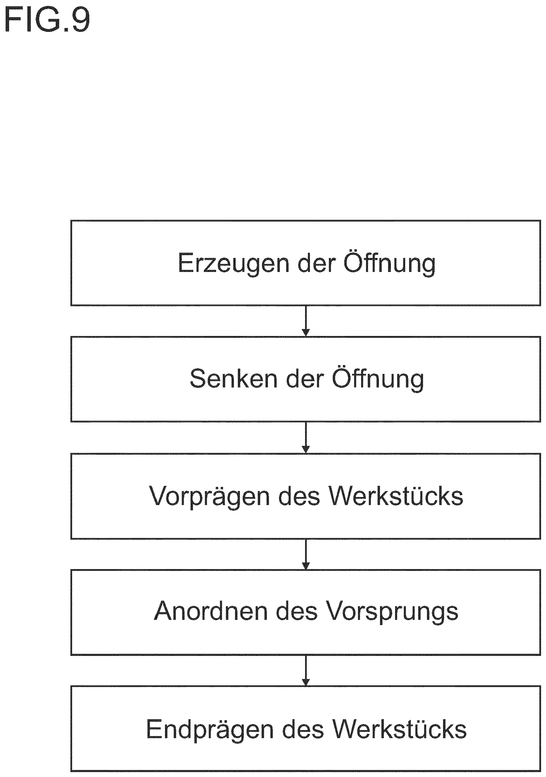

In Fig. 9 ist ein schematisches Ablaufdiagramm des Verfahrens zur Verbindung von zwei Werkstückabschnitten 2, 3 dargestellt.

Zunächst wird die Öffnung 10, wie in Fig. 1 und 1a dargestellt, bspw. mittels Stanzen erzeugt. Die Öffnung 10 weist einen sich entlang der senkrecht zur ersten Außenfläche 6 und ersten Kontaktfläche 8 angeordneten Längsachse L der Öffnung 10 erstreckenden kreisförmigen Querschnitt Q auf.

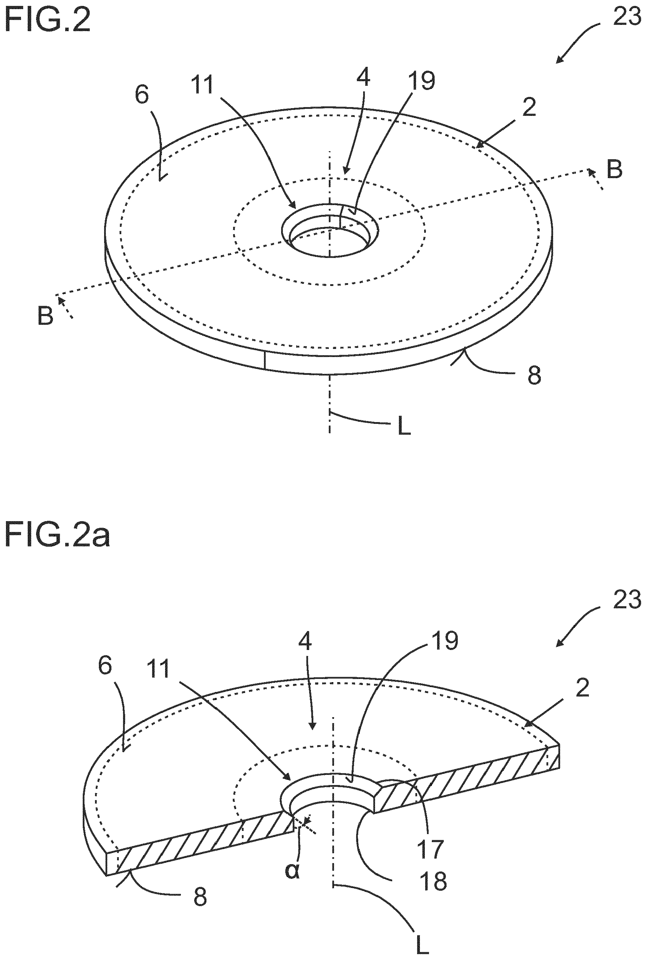

Die Öffnung 10 wird gemäß Fig. 2 und 2a im Bereich der ersten Außenfläche 6 zur Erzeugung des konischen Kontaktabschnitts 11 gesenkt. Der konische Kontaktabschnitt 11 weist hierdurch einen an die erste Außenfläche 6 angrenzenden Umfang 17 auf, der größer als ein Umfang 18 der Öffnung 10 ist. Der konische Kontaktabschnitt 11 weist durch das Senken eine koaxial zu der Öffnung 10 angeordnete konische Kontur 19 auf (vgl. Fig. 2a). Die konische Kontur 19 ist in einem spitzen Winkel α von hier 40 ° zu der Längsachse L der Öffnung 10 angeordnet.

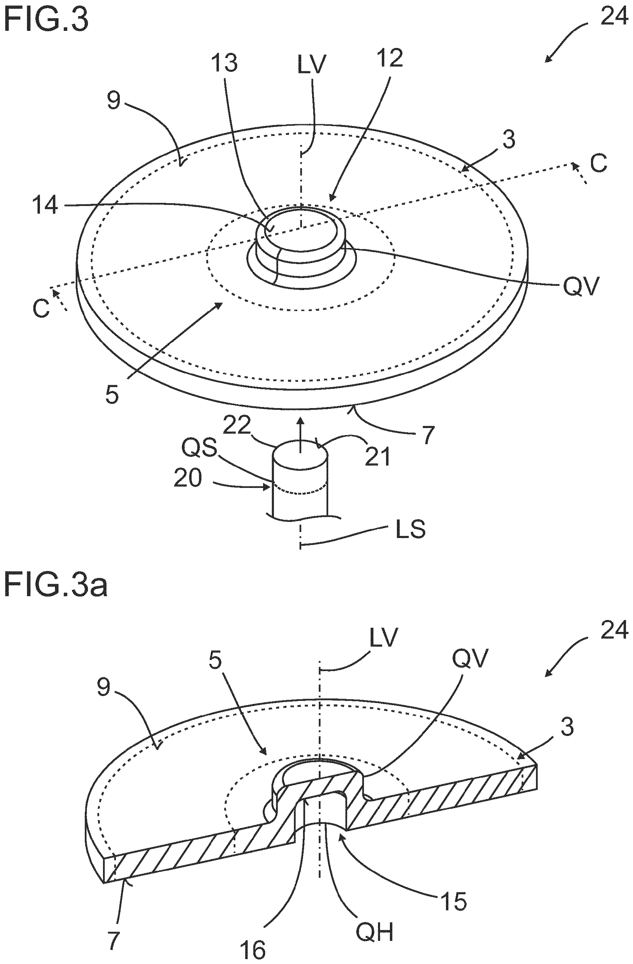

Der zweite Werkstückabschnitt 3 wird, wie in Fig. 3 und 3a dargestellt, zur Erzeugung des Vorsprungs 12 vorgeprägt. Der Vorsprung 12 ist zylinderartig ausgebildet und weist einen sich von der zweiten Kontaktfläche 9 entlang der senkrecht zu der zweiten Kontaktfläche 9 angeordneten Längsachse LV des Vorsprungs 12 erstreckenden Querschnitt QV auf. Letzterer ist zur Aufnahme des Vorsprungs 12 in der Öffnung 10 an den Querschnitt Q der Öffnung 10 angepasst.

Der Vorsprung 12 wird zur Anlage der ersten Kontaktfläche 8 an der zweiten Kontaktfläche 9 in der Öffnung 10 angeordnet. Hierzu werden die beiden Werkstückabschnitte 2, 3 derart ausgerichtet, dass die Längsachse LV des Vorsprungs 12 in der Längsachse L der Öffnung 10 angeordnet ist und die beiden Kontaktflächen 8, 9 einander zugewandt angeordnet sind. Anschließend werden die beiden Werkstückabschnitte 2, 3 in Richtung der Längsachsen L, LV der Öffnung 10 und des Vorsprungs 12 zueinander maschinell verstellt, bis die Kontaktflächen 8, 9 aneinander anliegen.

Schließlich wird der in der Öffnung 10 angeordnete Vorsprung 12 zur Erzeugung der formschlüssigen Verbindung der Werkstückabschnitte 2, 3 derart endgeprägt, dass der Endabschnitt 13 des Vorsprungs 12 in den konischen Kontaktabschnitt 11 des ersten Werkstückabschnitts 2 umgeformt wird.

Das Vorprägen und Endprägen erfolgt jeweils mittels eines Stanzdorns 20. Dieser ist zylinderartig ausgebildet und weist einen sich entlang einer Längsachse LS des Stanzdorns 20 erstreckenden kreisförmigen Querschnitt QS auf. Der Stanzdorn 20 weist ferner eine senkrecht zu der Längsachse LS des Stanzdorn 20 angeordnete Stanzfläche 21 auf. Beim Vorprägen und beim Endprägen wird der Stanzdorn 20 entlang einer senkrecht zu der zweiten Außenfläche 7 angeordneten Bewegungsbahn in Richtung auf die zweite Außenfläche 7 maschinell mittels eines Kolbens verstellt.

Beim Vorprägen übt der Stanzdorn 21 zur Erzeugung des Vorsprungs 12 Druck auf die zweite Außenfläche 7 auf, wodurch der zweite Werkstückabschnitt 3 im Bereich des zweiten flachen Verbindungsabschnitts 5 in Richtung der Bewegungsrichtung des Stanzdorns 20 umgeformt wird. Hierbei wird der Hohlraum 15 des Vorsprungs 12 des zweiten Werkstückabschnitts 3 durch die auf die zweite Außenfläche 7 einwirkende Stanzfläche 21 des Stanzdorns 20 gebildet. Die Stanzfläche 21 ist an den Vorsprung 12 und die Öffnung 10 angepasst, d.h. dass die Stanzfläche 21 eine an den Umfang 18 der Öffnung 10 angepasste Kontur 22 aufweist, die kleiner als der Umfang 18 der Öffnung 10 ist.

Beim Endprägen wird auf die Innenfläche 16 des Vorsprungs 12 über die Stanzfläche 21 des Stanzdorns 20 Druck ausgeübt. Gleichzeitig wird auf den Endabschnitt 13 des Vorsprungs 12 Druck ausgeübt, sodass das Material des Endabschnitts 13 in den konischen Kontaktabschnitt 11 fließt, wodurch die Stirnfläche 14 des Endabschnitts 13 flächenbündig zu der ersten Außenfläche 6 verläuft. Der Endabschnitt 13 des Vorsprungs 12 und der konische Kontaktabschnitt 11 stehen in einem Volumenverhältnis von 1:1.

Durch das Endprägen wird ein Formschluss zwischen dem umgeformten Endabschnitt 13 des Vorsprungs 12 und dem konischen Kontaktabschnitt 11 in Längsachsenrichtung der Öffnung 10 und in Längsachsenrichtung des Vorsprungs 12, also ein Formschluss zwischen dem ersten und zweiten Werkstückabschnitt 2, 3 erzeugt.

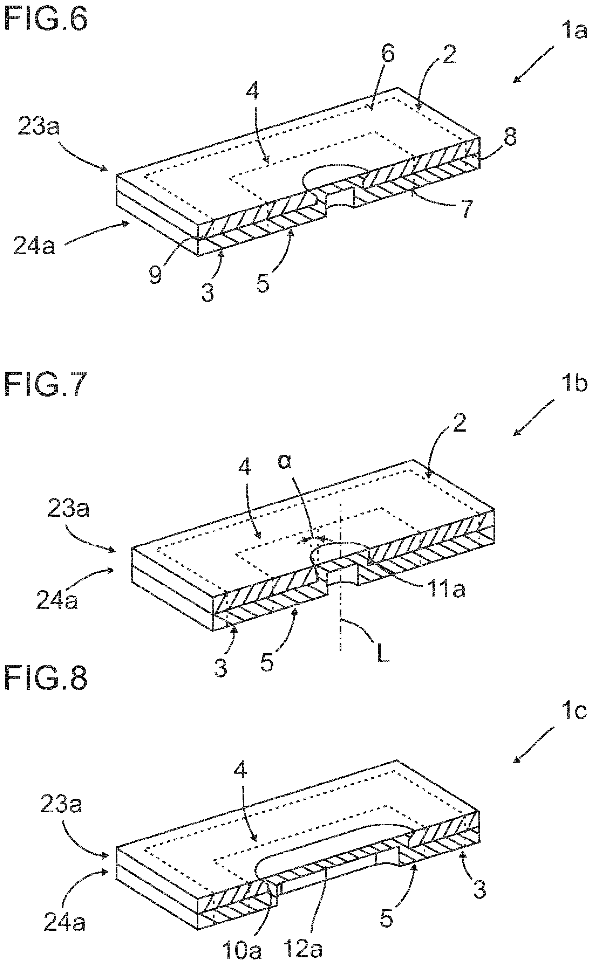

Für die in den Figuren 6 bis 8 gezeigten Werkstückverbindungen 1a, 1b und 1c, die weitere Ausführungsformen der Werkstückverbindung 1 darstellen, werden für gleiche Bauteile gleiche Bezugszeichen verwendet. Die Werkstückverbindungen 1a, 1b und 1c unterscheiden sich von der Werkstückverbindung 1 gemäß Fig. 5 und 5a durch unterschiedliche Querschnitte Q, QV der Öffnung 10 oder des Vorsprungs 12 sowie verschiedene Grundformen der Werkstücke 23, 24 oder einen unterschiedlichen Winkel α des konischen Kontaktabschnitts 11 zu der Längsachse L der Öffnung 10. Die Werkstücke 23a, 24a der Werkstückverbindungen 1a, 1b, 1c weisen jeweils im Gegensatz zu den Werkstücken 23, 24 der Werkstückverbindung 1 anstatt einer kreisartigen Form eine rechteckige Form auf. Bei der Werkstückverbindung 1b gemäß Fig. 7 weist der konische Kontaktabschnitt 11a einen spitzeren Winkel α von 15 ° zu der Längsachse L der Öffnung 10 auf. Der Querschnitt Q der Öffnung 10a und der Querschnitt QV des Vorsprungs 12a der Werkstückverbindung 1c gemäß Fig. 8 sind ellipsenförmig ausgebildet.

Durch das Endprägen des Vorsprungs 12, 12a kann eine formschlüssige Verbindung von zwei Werkstückabschnitten 2, 3 oder zwei Werkstücken 23, 24, 23a, 24a mit hoher Festigkeit und Stabilität erzielt werden. Mit dem vorgestellten Verfahren können auch mehr als zwei Werkstückabschnitte 2, 3 oder Werkstücke 23, 24, 23a, 24a miteinander verbunden werden. Außerdem können Werkstückabschnitte 2, 3 oder Werkstücke 23, 24, 23a, 24a unterschiedlicher Dicke und/oder unterschiedlicher Werkstoffe miteinander verbunden werden. Für großflächige Werkstückabschnitte 2, 3 oder Werkstücke 23, 24, 23a, 24a können mehrere im Abstand voneinander angeordnete flache Verbindungsabschnitte 4, 5 jeweils mit dem mit der Öffnung 10, 10a verbundenen Vorsprung 12, 12a vorgesehen sein.

Alle in Verbindung mit den einzelnen Ausführungsformen der Erfindung erläuterten Merkmale können in unterschiedlicher Kombination für das Verfahren oder die Werkstückverbindung vorgesehen sein, um gleichzeitig deren vorteilhafte Wirkungen zu realisieren, auch wenn diese zu unterschiedlichen Ausführungsformen beschrieben worden sind.

Der Schutzbereich der vorliegenden Erfindung ist durch die Patentansprüche gegeben und wird durch die in der Beschreibung erläuterten oder den Figuren gezeigten Merkmale nicht beschränkt.

### Bezugszeichenliste

- 1, 1a-c: Werkstückverbindung
- 2: erster Werkstückabschnitt
- 3: zweiter Werkstückabschnitt
- 4: erster Verbindungsabschnitt
- 5: zweiter Verbindungsabschnitt
- 6: erste Außenfläche
- 7: zweite Außenfläche
- 8: erste Kontaktfläche
- 9: zweite Kontaktfläche
- 10, 10a: Öffnung
- 11, 11a: konischer Kontaktabschnitt
- 12, 12a: Vorsprung
- 13: Endabschnitt
- 14: Stirnfläche
- 15: Hohlraum
- 16: Innenfläche
- 17: Umfang des Kontaktabschnitts
- 18: Umfang der Öffnung
- 19: konische Kontur
- 20: Stanzdorn
- 21: Stanzfläche
- 22: Kontur der Stanzfläche
- 23: erstes Werkstück
- 24: zweites Werkstück
- L: Längsachse der Öffnung
- LS: Längsachse des Stanzdorns
- LV: Längsachse des Vorsprungs
- Q: Querschnitt der Öffnung
- QH: Querschnitt des Hohlraums
- QS: Querschnitt des Stanzdorns
- QV: Querschnitt des Vorsprungs
- α: Winkel der konischen Kontur zur Längsachse der Öffnung

## Patentansprüche

1. Verfahren zum Verbinden von mindestens zwei Werkstückabschnitten, die jeweils einen flachen Verbindungsabschnitt (4, 5) mit einer Außenfläche (6, 7) und einer von der Außenfläche (6, 7) abgewandten Kontaktfläche (8, 9) aufweisen, mit den Schritten
- Erzeugen einer einen ersten Werkstückabschnitt (2) im Bereich des Verbindungsabschnitts (4) durchdringenden, an eine erste Kontaktfläche (8) und eine erste Außenfläche (6) angrenzenden Öffnung (10, 10a),
- Senken der Öffnung (10, 10a, 10b) im Bereich der ersten Außenfläche (6) zur Erzeugung eines konischen Kontaktabschnitts (11, 11a),
- Vorprägen eines zweiten Werkstückabschnitts (3) zur Erzeugung eines zur Anordnung in der Öffnung (10, 10a) angepassten, von einer zweiten Kontaktfläche (9) des zweiten Werkstückabschnitts (3) im Bereich des Verbindungsabschnitts (5) vorstehenden Vorsprungs (12, 12a) und
- Anordnen des Vorsprungs (12, 12a) in der Öffnung (10, 10a) zur Anlage der ersten Kontaktfläche (8) an der zweiten Kontaktfläche (9),
**dadurch gekennzeichnet, dass** der in der Öffnung (10, 10a) angeordnete Vorsprung (12, 12a) zur Erzeugung einer formschlüssigen Verbindung der Werkstückabschnitte (2, 3) derart endgeprägt wird, dass ein Endabschnitt (13) des Vorsprungs (12, 12a) in den konischen Kontaktabschnitt (11, 11a) des ersten Werkstückabschnitts (2) umgeformt wird.

2. Verfahren nach Anspruch 1, **dadurch gekennzeichnet, dass** der Vorsprung (12, 12a) derart endgeprägt wird, dass eine der Kontaktfläche (8, 9) abgewandte Stirnfläche (14) des Vorsprungs (12, 12a) flächenbündig zu der ersten Außenfläche (6) verläuft.

3. Verfahren nach einem oder mehrerer der vorherigen Ansprüche, **dadurch gekennzeichnet, dass** die erste Außenfläche (6) des ersten Werkstückabschnitts (2) derart bearbeitet wird, dass der konische Kontaktabschnitt (11, 11a) des ersten Werkstückabschnitts (2) eine koaxial zu der Öffnung (10, 10a) angeordnete konische Kontur (19) aufweist.

4. Verfahren nach einem oder mehrerer der vorherigen Ansprüche, **dadurch gekennzeichnet, dass** die erste Außenfläche (6) des ersten Werkstückabschnitts (2) derart bearbeitet und/oder der zweite Werkstückabschnitt (3) derart umgeformt wird, dass der Endabschnitt (13) des Vorsprungs (12, 12a) und der konische Kontaktabschnitt (11, 11a) in einem Volumenverhältnis von maximal 1:2, bevorzugt maximal 1:1,5, besonders bevorzugt maximal 1:1 stehen.

5. Verfahren nach einem oder mehrerer der vorherigen Ansprüche, **dadurch gekennzeichnet, dass** der Vorsprung (12, 12a) außenflächenseitig mittels eines entlang einer im Winkel, bevorzugt senkrecht zu der zweiten Außenfläche (7) angeordneten Bewegungsbahn verstellbaren Stanzdorns (20) umgeformt wird.

6. Verfahren nach einem oder mehrerer der vorherigen Ansprüche, **dadurch gekennzeichnet, dass** der Stanzdorn (20) eine an den Vorsprung (12, 12a) angepasste Stanzfläche (21) aufweist, die beim Umformen des Vorsprungs (12, 12a) zur Verformung des Endabschnitts (13) auf eine Innenfläche (16) des Vorsprungs (12, 12a) einwirkt.

7. Verfahren nach einem oder mehrerer der vorherigen Ansprüche, **dadurch gekennzeichnet, dass** die Werkstückabschnitte (2, 3) vor dem Anordnen des Vorsprungs (12, 12a) derart zueinander ausgerichtet werden, dass eine Längsachse (LV) des Vorsprungs (12, 12a) in der Längsachse (L) der Öffnung (10, 10a) angeordnet ist.

8. Werkstückverbindung, insbesondere hergestellt nach einem Verfahren nach einem der Ansprüche 1 bis 7, aufweisend
- einen einen ersten flachen Verbindungsabschnitt (4) mit einer ersten Außenfläche (6) und einer von der ersten Außenfläche (6) abgewandten ersten Kontaktfläche (8) aufweisenden ersten Werkstückabschnitt (2) mit einer den ersten Werkstückabschnitt (2) durchdringenden, an die erste Kontaktfläche (8) und die erste Außenfläche (6) angrenzenden Öffnung (10, 10a) und einem im Bereich der Öffnung (10, 10a) angeordneten konischen Kontaktabschnitt (11, 11a), und
- einen einen zweiten flachen Verbindungsabschnitt (5) mit einer zweiten Außenfläche (7) und einer an der ersten Kontaktfläche (8) des ersten Werkstückabschnitts (2) anliegenden sowie von der zweiten Außenfläche (7) abgewandten zweiten Kontaktfläche (9) aufweisenden zweiten Werkstückabschnitt (3) mit einem von der zweiten Kontaktfläche (9) vorstehenden und in der Öffnung (10, 10a) angeordneten Vorsprung (12, 12a),
**dadurch gekennzeichnet, dass** der Vorsprung (12, 12a) des zweiten Werkstückabschnitts (3) einen derartig in den konischen Kontaktabschnitt (11, 11a) umgeformten Endabschnitt (13) aufweist, dass die beiden Werkstückabschnitte (2, 3) in Längsachsenrichtung der Öffnung (10, 10a) und des Vorsprungs (12, 12a) formschlüssig miteinander verbunden sind.

9. Werkstückverbindung nach Anspruch 8, **dadurch gekennzeichnet, dass** der Endabschnitt (13) derart umgeformt ist, dass eine der Kontaktfläche (8, 9) abgewandte Stirnfläche (14) des Vorsprungs (12, 12a) flächenbündig zu der ersten Außenfläche (6) verläuft.
